(19) **Europäisches Patentamt**
**European Patent Office**
**Office européen des brevets**

(11) **EP 1 942 370 A1**

(12) **EUROPEAN PATENT APPLICATION**
published in accordance with Art. 153(4) EPC

(43) Date of publication:
**09.07.2008 Bulletin 2008/28**

(51) Int Cl.:
*G02F 1/13357* (2006.01)   *F21S 2/00* (2006.01)
*F21V 5/04* (2006.01)   *G02B 5/02* (2006.01)
*F21Y 103/00* (2006.01)

(21) Application number: **06821996.3**

(22) Date of filing: **20.10.2006**

(86) International application number:
**PCT/JP2006/320935**

(87) International publication number:
**WO 2007/049515 (03.05.2007 Gazette 2007/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.10.2005 JP 2005310671**

(71) Applicant: **Asahi Kasei Chemicals Corporation Tokyo 100-8440 (JP)**

(72) Inventors:
• **MATSUMOTO, Yuichi**
  **Chiyoda-ku, Tokyo 1008440 (JP)**
• **NAKANO, Shingo**
  **Chiyoda-ku, Tokyo 1008440 (JP)**

(74) Representative: **HOFFMANN EITLE**
**Patent- und Rechtsanwälte**
**Arabellastrasse 4**
**81925 München (DE)**

(54) **LIGHT TRANSMITTING RESIN BOARD**

(57) There is provided a light-transmitting resin plate for a liquid crystal display which has achieved conversion of a linear light source into a surface light source together with a higher luminance by minimizing the loss of the transmitted light due to a light-diffusing agent and forming a specific semi-elliptic convex lens shape on the light-exiting surface side. There is also provided a light-transmitting resin plate which can satisfy a long-term optical stability of a backlight as well as shape stability of the resin plate.

[Figure 4]

**EP 1 942 370 A1**

**Description**

Technical Field

The present invention relates to a light-transmitting resin plate used for a direct backlight for a liquid crystal display. More particularly, the present invention relates to a light-transmitting resin plate for a liquid crystal display which sufficiently diffuses light so that the image of a linear light source (the shape of the light source) is invisible through the plate when it is viewed from the light-exiting surface side of the plate and has very high performance of transmitting light to the light-exiting surface side.

Background Art

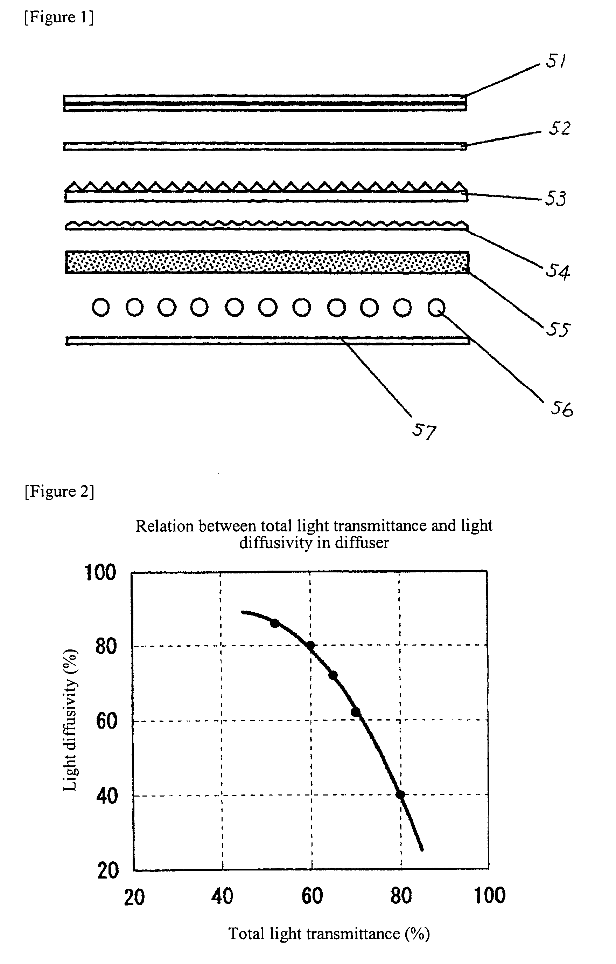

The application of a liquid crystal display using a transmissive liquid crystal panel has been rapidly expanding as a thin display apparatus which replaces a cathode-ray tube. Since a liquid crystal panel does not emit light in itself, it uses a backside light source called a backlight. There are roughly used two backlighting systems.
One system is a so-called edge light type backlight in which a linear light source typified by cold-cathode tubes is disposed at the end face of a transparent resin plate called a light guide plate, and it is converted into a surface light source by reflecting and scattering the light entering from the end face of the light guide plate so that the light is guided to the liquid crystal panel side.
The other system is a so-called direct backlight, wherein it has a linear light source prepared by arranging a plurality of cold-cathode tubes or a light source prepared by linearly arranging multiple LEDs, and on the light source, a light diffuser or an optical sheet containing a light-diffusing agent is disposed to transmit and scatter light from the cold-cathode tubes to obtain a surface light source.
An edge light type backlight is widely used for a small-sized liquid crystal display such as a notebook personal computer, a desktop personal computer, and a cellular phone. On the other hand, a direct backlight is more widely used than an edge light type backlight for a liquid crystal TV application which asks for higher luminance.
Here, the structure of a liquid crystal display using a direct backlight is conceptually described with reference to Figure 1, in which reference symbol 51 denotes a liquid crystal panel; reference symbol 52 denotes a reflection type polarization film; reference symbol 53 denotes a light focusing sheet; reference symbol 54 denotes a diffusion sheet; reference symbol 55 denotes a light diffuser; reference symbol 56 denotes a linear light source; and reference symbol 57 denotes a reflection sheet. Thus, among the members which constitute a direct backlight, the light diffuser 55 is used as a member for converting a plurality of linear light sources 56 into a uniform surface light source.
Patent Documents 1 and 2 disclose a method of mixing several percent by weight of spherical particulates made of a silicone resin into a transparent thermoplastic resin, and Patent Document 3 discloses a method of adding several percent by weight to several tens percent by weight of light-diffusing agents having different refractive indices into a transparent resin. These methods comprise scattering the light which enters through the light-entering surface of a light diffuser into the inside thereof to thereby make the shape of a linear light source invisible. However, there is a problem that a higher amount of a light-diffusing agent to be added for improving a light diffusion function gives a higher light diffusion but conversely a lower light transmission through the diffuser to thereby darken the liquid crystal screen. Thus, it has not been achieved to make a linear light source invisible as well as to provide a higher screen luminance.
Moreover, the development of a light diffuser in which triangular prisms and circular lenses are formed as an optical sheet for a liquid crystal display (for example, refer to Patent Documents 4 to 6) has been actively performed. Further, the development of a layered diffusion sheet which contains a dispersing agent in circular lenses and an inner layer part (refer to Patent Document 7) has been actively performed. However, these techniques had disadvantages in that the concentration of the dispersing agent added was too high to attain higher luminance; reworkable material containing additives was not available for recycling since the additives were not contained in the lens layer; and the like. Thus, in the conventional products, it has not been achieved to combine conversion of a linear light source into a surface light source with a higher luminance.
These techniques are broadly divided into the following: i. a technique aiming at a higher luminance of a liquid crystal display utilizing triangular prisms; ii. a technique aiming at higher light diffusion and luminance by adding a light-diffusing agent to triangular prisms; and iii. a technique aiming at a wider viewing angle by disposing a lens sheet on the observation side of a liquid crystal panel in a liquid crystal display.
The technique in which a triangular prism or a lens sheet is disposed in a light diffuser had following problems. The diffusion sheet aiming at a higher luminance by the prism according to the above i needs to have a transparent interior, and since it originally develops its function when it is disposed as a separate member immediately above the diffused light which is converted into a surface light source, it cannot satisfy its function only with a triangular prism. The diffusion sheet aiming at higher light diffusion and luminance by adding a light-diffusing agent to triangular prisms according to the above ii cannot achieve a higher luminance since the function of triangular prisms is damaged by the light-diffusing agent. The diffusion sheet aiming at a wider viewing angle by disposing a lens sheet on the observation side of a liquid crystal panel in a liquid crystal display according to the above iii has not yet been satisfactory for a higher luminance.

As for a current mainstream light diffuser obtained by adding a light-diffusing agent, if the amount of the light-diffusing agent is increased until the light diffusion of a practical use level is obtained, the total light transmittance will fall to 65% or less, leading to the reduction of luminance. Figure 2 is a graph showing the relation between the total light transmittance of a light diffuser and the light diffusivity defined by the following equation. The total light transmittance was measured using a light diffuser in the shape of a flat plate obtained by blending a silicone dispersing agent with an acrylic resin which is a transparent resin and forming the blend into a sheet shape. Typically, when the silicone dispersing agent blended with an acrylic resin is increased, the total light transmittance will tend to fall, and the light diffusivity will tend to rise. That is, as shown in Figure 2, an acrylic resin containing no light-diffusing agent has a total light transmittance of higher than 90%, but it does not have a light diffusion required for a light diffuser. That is, it turns out that when a light-diffusing agent is added to an acrylic resin, the light diffusivity rapidly rises, but the total light transmittance falls with it.

$$ \text{Light diffusivity (\%)} = \{L\,(20°) + L\,(70°)\}/\{L\,(5°) \times 2\} \times 100 $$

L (5°): Transmitted light intensity of the light exiting at an angle of 5 degrees (mV)
L (20°): Transmitted light intensity of the light exiting at an angle of 20 degrees (mV)
L (70°): Transmitted light intensity of the light exiting at an angle of 70 degrees (mV)
Therefore, in the field of a direct backlight, a light diffusion sheet having high diffusion and high transmission performance is demanded, in which the sheet has a high total light transmittance while maintaining a high light diffusivity. In addition, as the enlargement of the screen size of a liquid crystal display quickly progresses in recent years, the development of an optical sheet having high diffusion and high transmission performance is called for combined with the energy saving of a backlight.

[Patent Document 1] JP-A-1-172801
[Patent Document 2] JP-A-2-194058
[Patent Document 3] JP-A-7-100985
[Patent Document 4] JP-A-7-294709
[Patent Document 5] JP-A-8-211230
[Patent Document 6] JP-A-8-313708
[Patent Document 7] JP-A-10-73808

Disclosure of the Invention

Problems to be Solved by the Invention

An object of the present invention is to provide a high-luminance light-transmitting resin plate for a liquid crystal display while achieving conversion of a linear light source into a surface light source, which conventional flat-plate light diffusers could not reach. Another object of the present invention is to provide a light-transmitting resin plate which can simultaneously satisfy a long-term optical stability of a backlight and shape stability of the resin plate.

Means for Solving the Problems

For solving the above problems, the present inventors have found a light-transmitting resin plate for a liquid crystal display which has achieved conversion of a linear light source into a surface light source together with a higher luminance by optimizing the additives concentration in a light-transmitting resin and the concentration of a light-diffusing agent to be added to thereby minimize the loss of the transmitted light and forming a semi-elliptic convex lens shape on the surface, and have accomplished the present invention.

That is, the present invention is as follows.

The invention claimed in claim 1 is a light-transmitting resin plate used for a direct backlight for a liquid crystal display comprising a plurality of linear light sources, characterized in that the light-transmitting resin plate comprises semi-elliptic convex lenses containing additives including a light-diffusing agent and that the convex lenses are arranged on a light-exiting surface in parallel with the major-axis direction of the linear light sources, and have an aspect ratio (=height/pitch) of 0.2 to 3.0.

Further, the invention claimed in claim 2 is the light-transmitting resin plate according to claim 1, characterized in that the aspect ratios of adjoining convex lenses have a ratio (=low-aspect lens/high-aspect lens) of 0.6 to 0.95.

Further, the invention claimed in claim 3 is the light-transmitting resin plate according to claim 1 or 2, characterized in that the additives in the resin plate are in a total concentration of 0.001% by weight to 5.0% by weight, and the light-diffusing agent included in the additives is in a concentration of 1.5% by weight or less based on the resin plate.

Further, the invention claimed in claim 4 is the light-transmitting resin plate according to any of claims 1 to 3, characterized in that the resin plate has a minimum thickness of 0.3 to 3.0 mm excluding the convex lens part as a surface thereof.

Further, the invention claimed in claim 5 is the light-transmitting resin plate according to any of claims 1 to 4, characterized in that the resin plate has a light-entering surface finely roughened on the side opposite to the convex lens surface, wherein the roughened surface has a surface roughness represented by Ra satisfying the following formula:

$$5 \leq Ra \leq 20.$$

Advantages of the Invention

The light-transmitting resin plate of the present invention can simultaneously satisfy (i) conversion of a linear light source into a surface light source and the attainment of higher luminance, (ii) a long-term optical stability of a backlight, and (iii) shape stability of a resin plate, when it is installed in a direct backlight for a liquid crystal display.

That is, it becomes possible to achieve a uniform surface light source with high luminance and to maintain optical stability over a long period of time by imparting a semi-elliptic convex lens shape having a specific aspect ratio to the surface of a light-transmitting resin plate and adding additives including a light-diffusing agent to the convex lens part. Further, it has become possible to impart rigidity to the resin plate and maintain shape stability thereof over a long period of time by setting the minimum thickness excluding the convex lens part within a specific range.

Brief Description of the Drawings

Figure 1 is a schematic diagram for explaining the configuration of a liquid crystal display using a conventional direct backlight;

Figure 2 is a diagram for explaining the relation between the total light transmittance and the light diffusivity in a diffuser;

Figure 3 is a diagram for explaining examples of the shape of convex lenses;

Figure 4 is a diagram for explaining a configuration example of a light-transmitting resin plate; and

Figure 5 is a diagram for explaining a layered configuration example of a light-transmitting resin plate.

Description of Symbols

A, B light-transmitting resin plate

1 light-exiting side

2 light-entering side

3 semi-elliptic convex lens

11 to 12 light-transmitting resin layer

Best Mode for Carrying Out the Invention

The present invention will be described in detail below.

The present invention provides a light-transmitting resin plate in which semi-elliptic convex lenses having a specific aspect ratio (=height/pitch) to which additives including a light-diffusing agent is added are arranged on a light-exiting surface in parallel with the major-axis direction of linear light sources.

The following is mentioned as resins used for the light-transmitting resin plate of the present invention. For example, the resins include an acrylic resin, a MS resin, a polystyrene resin, a polycarbonate resin, polyethylene, an AS resin, an ABS resin, PET, COP, $\alpha$-methylstyrene, polylactic acid, a fluororesin, a phenol resin, an epoxy resin, and a polyurethane resin. These resins include homopolymers or copolymers. It is also possible to incorporate a light-transmitting resin layer or an ultraviolet-curable resin layer as an additional layer into the light-transmitting resin plate having a lens part according to the present invention.

In the light-transmitting resin plate of the present invention, it is preferred to blend 0.001 % by weight to 5.0% by weight of additives into the lens part in the light-transmitting resin, and the concentration in the resin of the light-diffusing agent included in the additives is preferably 1.5% by weight or less. The concentration of the light-diffusing agent in the resin is more preferably 1.0% by weight or less. Examples of the additives include a light-diffusing agent, an ultraviolet absorber, a light stabilizer, an antistatic agent, an antioxidant, a coloring material, a fluorescent brightener, and a matting agent. Examples of the light-diffusing agent include acrylic crosslinked particles, styrenic crosslinked particles, silicone crosslinked particles, fluorine-based particles, glass particulates, $SiO_2$ particles, calcium carbonate, barium sulfate, titanium oxide, alumina, talc, and mica. These may be used alone or in combination. The particle size of the light-diffusing agent may be arbitrarily selected between 0.01 $\mu$m and 100 $\mu$m, and the shape thereof may be any shape selected from the group consisting of a true globular shape, an elliptic shape, a globular shape, an amorphous shape, a needle shape, a scaly shape, a hollow shape, a cubic shape, a triangular pyramid shape, and the like.

The amount of the additives to be blended with the convex lens part containing the light-diffusing agent and the like, which varies with the size of particulates and the thickness of a plate, is preferably adjusted in the range from 0.001 % by weight to 5.0% by weight. When the additives are added in an amount of 0.001 % by weight or more, the optical stability of the light diffuser is improved. When the additives are added in an amount of 5.0% or less, the resulting light diffuser can convert a linear light source into a better surface light source, thereby leading to improved luminance.

Moreover, the concentration of the light-diffusing agent in the resin is preferably adjusted to the range of 1.5% by weight or less. When the light-diffusing agent concentration is 1.5% by weight or less, internal scattering of light will not become excessive, and this can provide effective light emitting from the light diffuser, thereby leading to improved luminance. In order to obtain higher luminance, it is more preferred that the light-diffusing agent concentration in the resin is 1.0% by weight or less. When the light-diffusing agent concentration in the additives is within the above range, particularly, the color change (yellowing) by a prolonged photoirradiation from a liquid crystal backlight source will decrease extremely, and the long-term optical stability of the liquid crystal backlight itself will be improved.

Preferably, the semi-elliptic convex lenses to be formed on the surface of the light-transmitting resin plate need to be designed to have a lens pitch of from 0.1 to 1,000 $\mu$m, a height of from 0.02 to 3,000 $\mu$m, and an aspect ratio (= height/pitch) of from 0.2 to 3.0. An aspect ratio in the range of from 0.2 to 3.0 eliminates the image of a linear light source and improves luminance. Successive lenses may be the same or different convex lenses. In the case of the convex lens group which consists of a plurality of different semi-ellipses, the aspect ratio is calculated by using the pitch and the height as defined below. The pitch is defined as the distance between one end and the other end of a lens unit in the same repeating lens unit, and the height is defined as height of the highest lens in the lens group. If the aspect ratio of the semi-elliptic convex lens is less than 0.2, light diffusion performance will be reduced, and if it exceeds 3.0, a light focusing function will be reduced. Thus, these cases are not preferred. The aspect ratio of the semi-elliptic convex lens is preferably from 0.3 to 1.5.

Further, it is preferred to design the convex lenses so that the ratio of the aspect ratios of adjoining convex lenses (=low-aspect lens/high-aspect lens) is 0.6 to 0.95. In this case, the effect of eliminating a linear light source image and viewing angle characteristics are further improved compared with the case where the same convex lenses are used.

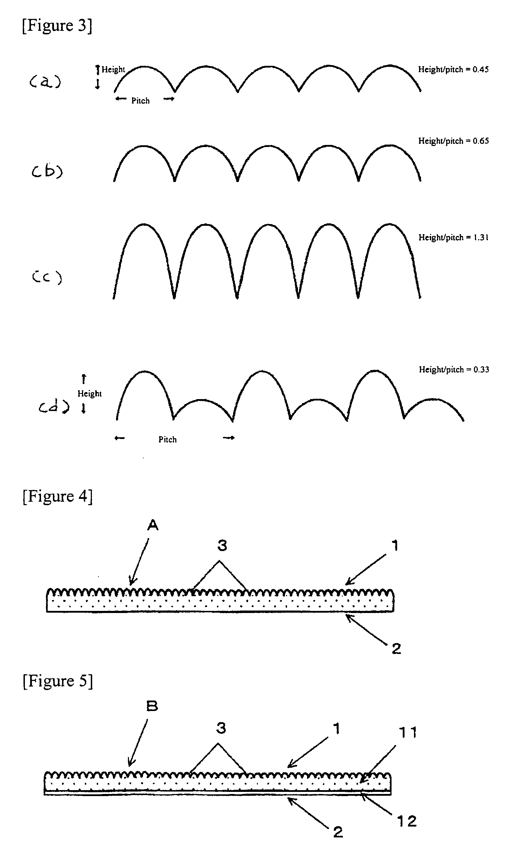

Figure 3 shows examples of the shape of the semi-elliptic convex lens 3. In Figure 3, (a) to (c) are examples of the height and the pitch of the convex lenses, and (d) is an example configured by a combination of a plurality of different semi-ellipses.

The minimum thickness excluding the convex lens part of the light-transmitting resin plate is preferably 0.3 to 3.0 mm, more preferably 0.5 to 2.5 mm. In the case where various optical sheets or optical films are disposed on the plate, the rigidity sufficient for supporting these sheets or films can be desirably obtained when the minimum thickness is more than 0.3 mm. Further, when the minimum thickness is less than 3.0 mm, the light-transmitting resin plate is desirably rigid and has a moderate weight. Furthermore, when the minimum thickness is in the range of 0.3 to 3.0 mm, shape stability can be maintained even if the plate is exposed to high temperature from a liquid crystal backlight source for a long period of time.

The light-entering surface on the opposite side of the convex lens surface of the light-transmitting resin plate of the present invention is preferably subjected to roughening treatment. The fine roughening applied to the light-entering surface is represented by the arithmetic mean roughness of the surface (Ra) defined by the method of JIS B0601. When the surface roughness of the treated surface is represented by Ra, it is preferably in the range of following formula: $5 \leq Ra \leq 20$. When Ra is 5 or more, the lamp image of a light source cannot be easily viewed. Further, when Ra is 20 or less, scattering on the surface is moderate, and luminance is improved.

Here, the light-transmitting resin plate according to the present invention will be described with reference to drawings.

Figure 4 is a diagram for explaining a configuration example of a light-transmitting resin plate of the present invention. The light-transmitting resin plate A shown in Figure 4 has an effect when it is used in place of the diffuser 55 in Figure 1 mentioned above. Since light focusing and light diffusion performance are improved by the light-transmitting resin plate A, at least the diffusion sheet 54 in Figure 1 is unnecessary, and this can contribute to reduce the cost of a liquid crystal backlight.

A plurality of semi-elliptic convex lenses 3 are formed on the light-exiting side 1, and the surface of the light-entering side 2 is subjected to fine roughening treatment in which Ra is adjusted to the range of $5 \leq Ra \leq 20$.

Figure 5 is a diagram for explaining a layered configuration example of a light-transmitting resin plate of the present invention. The light-transmitting resin plate B shown in Figure 5 comprises a two-layer structure composed of a light-transmitting resin layer 11 and a light-transmitting resin layer 12. The light-transmitting resin layer 11 is disposed at the light-exiting side 1, has semi-elliptic convex lenses formed thereon, and contains additives including a light-diffusing agent. The light-transmitting resin layer 12 is disposed at the light-entering side 2, has a surface to which fine roughening treatment is applied, and contains additives.

The resin used for the light-transmitting resin layer 12 is not particularly limited as long as it is a resin having transparency. The light-transmitting resin layer 12 is disposed at the light source side of a liquid crystal backlight. Material degradation by photoirradiation can be prevented, and optical stability can be improved, by adding an ultraviolet absorber and a light stabilizer to the light-transmitting resin layer 12. Further, by forming a layered structure in which the light-transmitting resin layer 12 is made thin, light stability can be given without adding a light stabilization material to the whole light-transmitting resin plate.

The thickness of the light-transmitting resin layer 12 is preferably about 1 to 10% of the whole thickness of the light-transmitting resin plate. Further, as the configuration of the layers of the light-transmitting resin plate, most preferred configuration can be.obtained by disposing a light stabilization layer at the light-entering surface and disposing a layer on which convex lenses are formed at the light-exiting surface, wherein additives including a light-diffusing agent is added to the convex lenses. However, the number of the layers may also be increased depending on the type and function of additives.

The production method of the light-transmitting resin plates A and B of the present invention is not particularly limited, but extrusion, press forming, etc. are used. When a multilayer plate is produced, co-extrusion, film lamination, coating, thermocompression bonding, etc. are used. In consideration of the advantages such as a simple structure of the equipment and the ability to continuously obtain stabilized quality, extrusion and co-extrusion are preferred. Co-extrusion is a process of heat melting and extruding resin compositions each used for a substrate layer and a coating layer in separate extruders, joining and layering these resin compositions within a wide die for forming a sheet, and forming them into a sheet via a cooling roller etc. The co-extrusion process comprises a configuration in which an extruder for a resin used as a coating layer is added to the common extrusion equipment for producing a resin plate and can be considered as a structurally simple method for producing a layered resin plate. The conditions of co-extrusion are the same as those generally used for extruding resin plates, and temperature conditions may be appropriately set according to the resin to be extruded.

The method forming the semi-elliptic convex lens 3 on the light-exiting side surface of the light-transmitting resin plates A and B includes, for example, a method of heating the light-transmitting resin plate to near the melting temperature thereof and pressing the heated plate to a mold in which the reversal shape of the above convex lens is carved beforehand to transfer the shape; a method of directly forming the lens on the surface of the light-transmitting resin plate with an ultraviolet curable resin; and a method of directly carving the lens with a laser, an engraver, etching, etc.

The light-transmitting resin plates A and B of the present invention are characterized in that the semi-elliptic convex lens 3 is formed at the light-exiting side 1, which is the opposite side of the light source, of a light diffuser (light-transmitting resin plates A and B). By forming the semi-elliptic convex lens 3 as the light-exiting surface 1 of a light diffuser, it is possible to reflect and refract the light obliquely entering the light-entering surface of the light diffuser, for example, from a center portion of adjoining linear light sources and to redirect this light in the direction of the normal to the light exiting surface of the light diffuser. Thus, the spacings between adjoining linear light sources can be made brighter.

If the semi-elliptic convex lens 3 is formed at the light-entering surface 2 of a light diffuser (light-transmitting resin plates A and B), the light obliquely entering through the light-entering surface of the light diffuser is totally reflected at the light-exiting surface of the light diffuser, which makes the spacings between adjoining linear light sources dark and makes the lamp-shaped image of the linear light sources easily visible.

Therefore, in the light-transmitting resin plates A and B of the present invention, the semi-elliptic convex lens 3 makes up the light-exiting side 1, on the side opposite to the light source.

Examples

The present invention will be described based on Examples. The evaluations performed in Examples and Comparative Examples are as follows.

A direct backlight liquid crystal display for evaluation (configured by disposing the light-transmitting resin plate A in place of the diffuser 55 in Figure 1) was prepared by disposing, as a linear light source, twelve cold-cathode tubes 4 mm in diameter and 500 mm in length so that they are spaced apart 25 mm with each other; placing the light-transmitting resin plate A on the cold-cathode tubes spaced apart 12 mm from them; and placing a liquid crystal panel spaced apart 2 mm from the resin plate. However, for the measurement of luminance and the visual determination of the image visibility and viewing angle characteristics of a linear light source as mentioned below, the evaluations were performed excluding the liquid crystal panel.

As for the average roughness (Ra) given to the light-entering surface, the arithmetic mean roughness (Ra) of the object was measured using a surface roughness meter (SURFCOM575A manufactured by Tokyo Seimitsu Co., Ltd.) by a method according to JIS B0601. At that time, the measurement was performed at a cutoff value of 2.5 mm and an evaluation length of 20 mm.

The cold-cathode tube was turned on by applying a voltage of 16 V thereto, and the luminance at the central part of a diffuser was measured from a position 750 mm away from it using a luminance meter (BM-7 manufactured by TOPCON CORPORATION). A luminance at the central part of a diffuser of 5,000 Cd/m$^2$ or more was defined as the standard for determining good or bad of the luminance measured under the above measurement conditions in consideration of the reduction of brightness by incorporating a liquid crystal panel. If the luminance is lower than this value, the function as a direct backlight for liquid crystal displays will not be satisfied.

The visibility of the linear light source image of a cold-cathode tube was checked visually. When the shape of the linear light source was invisible through the resin plate, the visibility was determined as O, and when the shape of the linear light source was visible through the resin plate, the visibility was determined as X.

Further, as for viewing angle characteristics, the screen of the liquid crystal backlight in an upright state was observed horizontally from left to right in an angle range of from -88° to +88° as the front is set at an angle of 0°. The screen was visually checked whether the shape of a linear light source was visible or not, and how bright the screen was, depending on the varying viewing angle, and the results were relatively evaluated by using excellent, good, or poor grading.

Further, by using the above apparatus for evaluation incorporating a liquid crystal panel, the optical stability (color) and shape stability (warpage) of the diffuser after continuously turning light for three months were determined visually.

Example 1

An acrylic resin ("Delpet (registered trademark) LP-1" manufactured by Asahi Kasei Chemicals Corporation) was used as a light-transmitting resin. The acrylic resin was blended with additives. As a light-diffusing agent, polymethylsilsesquioxane particulates having an average particle size of 2 μm was used in an amount of 0.002% by weight. An ultraviolet absorber, a light stabilizer, an antioxidant, a coloring material, and a matting agent were used as other additives. The total amount of the additives blended was 3.002% by weight. The blended material was extruded to obtain a light-transmitting resin plate having a thickness of 2 mm. The resin plate was heated to about 150°C and thermo-compressed with a mold whose surface was carved into a semi-elliptic convex lens shape having a pitch of 120 μm and a depth of 45 μm to obtain a light-transmitting resin plate on which the same semi-elliptic convex lenses having a pitch of 120 μm and a height of 40 μm were formed. The ratio of the height to pitch (=height/pitch) of the semi-elliptic convex lens was 0.33. Then, the surface at the opposite side of the semi-elliptic convex lenses was roughened by sand blasting to obtain a light-transmitting resin plate A having a surface roughness Ra=15. The minimum thickness of the light-transmitting resin plate A on which the semi-elliptic convex lenses were formed (the thickness excluding the convex lens parts) was 1.7 mm.

The above light-transmitting resin plate A was disposed as a light diffuser of a direct backlight liquid crystal display for evaluation so that the semi-elliptic convex lenses were arranged at the opposite side of the light source (light-exiting side 1), and the apparatus was evaluated for the determination of whether a light source image was observed visually or not, luminance evaluation, and the determination of light stability and shape stability. The evaluation results are shown in Table 1.

Example 2

A light-transmitting resin plate on which lenses are formed was obtained in the same manner as in Example 1 except that 0.03% by weight of the above light-diffusing agent was blended with the light-transmitting resin, and the total amount of the additives blended was changed to 3.03% by weight. The evaluation results are shown in Table 1.

Example 3

A light-transmitting resin plate on which lenses are formed was obtained in the same manner as in Example 1 except that 0.90% by weight of the above light-diffusing agent was blended with the light-transmitting resin, and the total amount of the additives blended was changed to 3.90% by weight. The evaluation results are shown in Table 1.

Comparative Example 1

A light-transmitting resin plate having a thickness of 2 mm was obtained by extrusion in the same manner as in Example 1 except that 1.80% by weight of the above light-diffusing agent was blended with the light-transmitting resin; the total amount of the additives blended was changed to 4.80% by weight; and the lens shapes were not formed. The resulting resin plate was measured for the total light transmittance, and it was found to be Tt=60%. When the resin plate was placed on the direct backlight and observed, the light source image was not visible, but the luminance was as low as 3,600 Cd/m$^2$. The evaluation results are shown in Table 1.

Comparative Example 2

A light-transmitting resin plate on which lenses were formed was obtained in the same manner as in Example 1 except that a light-diffusing agent and additives were not blended with the light-transmitting resin. The evaluation results are shown in Table 1.

Example 4

An acrylic resin (trade name "Delpet LP-1" manufactured by Asahi Kasei Chemicals Corporation) was used as a light-transmitting resin. The acrylic resin was blended with additives. As a light-diffusing agent, polymethylsilsesquioxane particulates having an average particle size of 2 $\mu$m was used in an amount of 0.9% by weight. An ultraviolet absorber, a light stabilizer, an antioxidant, a coloring material, and a matting agent were used as other additives. The total amount of the additives blended was 3.9% by weight. The blended material was extruded to obtain a light-transmitting resin plate having a thickness of 2 mm. The resin plate was heated to about 150°C and thermo-compressed with a mold whose surface was carved into a semi-elliptic convex lens shape having a pitch of 150 $\mu$m and a depth of 50 $\mu$m to obtain a light-transmitting resin plate on which the same semi-elliptic convex lenses having a pitch of 150 $\mu$m and a height of 45 $\mu$m were formed. The aspect ratio (=height/pitch) of the semi-elliptic convex lens was 0.45 (refer to Figure 3 (a)). Then, the surface at the opposite side of the semi-elliptic convex lenses was roughened by sand blasting to obtain a light-transmitting resin plate A having a surface roughness Ra=15. The minimum thickness of the light-transmitting resin plate A on which the semi-elliptic convex lenses were formed (the thickness excluding the convex lens parts) was 1.65 mm.

The above light-transmitting resin plate A was disposed as a light diffuser of a direct backlight liquid crystal display for evaluation so that the lens shapes were arranged on the side opposite to the light source, and the apparatus was evaluated for the determination of whether a light source image was observed visually or not, luminance evaluation, and the determination of light stability and shape stability. The evaluation results are shown in Table 1.

Example 5

In the same manner as in Example 4, the resin plate was thermo-compressed with a mold whose surface was carved into a semi-elliptic convex lens shape having a pitch of 140 $\mu$m and a depth of 180 $\mu$m to obtain a light-transmitting resin plate on which semi-elliptic convex lenses 3 having a pitch of 130 $\mu$m and a height of 170 $\mu$m were formed. The aspect ratio (=height/pitch) of the semi-elliptic convex lenses was 1.31 (refer to Figure 3 (c)). Then, the surface at the opposite side of the semi-elliptic convex lenses was roughened by sand blasting to obtain a light-transmitting resin plate A having a surface roughness Ra=15. The minimum thickness of the light-transmitting resin plate A on which the semi-elliptic convex lenses were formed (the thickness excluding the convex lens parts) was 1.65 mm.

The above light-transmitting resin plate A was disposed as a light diffuser of a direct backlight liquid crystal display for evaluation so that the lens shapes were arranged at the opposite side of the light source, and the apparatus was evaluated for the determination of whether a light source image was observed visually or not, luminance evaluation, and the determination of light stability and shape stability. The evaluation results are shown in Table 1.

Example 6

A light-transmitting resin plate on which lenses are formed was obtained in the same manner as in Example 5 except that the surface at the opposite side of the semi-elliptic convex lenses was roughened by sand blasting to provide a surface roughness Ra=7. The evaluation results are shown in Table 1.

Example 7

In the same manner as in Example 4, the resin plate was thermo-compressed with a mold whose surface was carved into a semi-elliptic convex lens shape having a pitch of 65 $\mu$m and a depth of 160 $\mu$m to obtain a light-transmitting resin plate on which semi-elliptic convex lenses having a pitch of 60 $\mu$m and a height of 150 $\mu$m were formed. The aspect ratio (=height/pitch) of the semi-elliptic convex lenses was 2.5. Then, the surface at the opposite side of the semi-elliptic convex lenses 3 was roughened by sand blasting to obtain a light-transmitting resin plate A having a surface roughness Ra=15. The minimum thickness of the light-transmitting resin plate A on which the semi-elliptic convex lenses were formed (the thickness excluding the convex lens parts) was 1.6 mm. The evaluation results are shown in Table 1.

Comparative Example 3

In the same manner as in Example 7, the resin plate was thermo-compressed with a mold whose surface was carved into a semi-elliptic convex lens shape having a pitch of 120 $\mu$m and a depth of 340 $\mu$m to obtain a light-transmitting resin plate on which semi-elliptic convex lenses having a pitch of 120 $\mu$m and a height of 330 $\mu$m were formed. The aspect ratio (=height/pitch) of the semi-elliptic convex lenses was 3.3. Then, the surface at the opposite side of the semi-elliptic convex lenses was roughened by sand blasting to obtain a light-transmitting resin plate having a surface roughness Ra=15. The light source image was not visible, but the luminance was as low as 3,000 Cd/m$^2$. The evaluation results are shown in Table 1.

Example 8

A light-transmitting resin plate on which lenses are formed was obtained in the same manner as in Example 3 except that the convex lenses were those configured by a combination of a plurality of different semi-ellipses (a combination of semi-ellipses having a pitch of 150 $\mu$m and a height of 67 $\mu$m and those having a pitch of 180 $\mu$m and a height of 112 $\mu$m) (refer to Figure 3 (d)). The evaluation results are shown in Table 1.

Comparative Example 4

A light-transmitting resin plate on which lenses are formed was obtained in the same manner as in Example 3 except that the convex lenses were those configured by a combination of semi-ellipses and triangles (a combination of semi-ellipses having a pitch of 180 $\mu$m and a height of 112 $\mu$m and triangles having a pitch of 150 $\mu$m and a height of 75 $\mu$m). The evaluation results are shown in Table 1.

Example 9

A light-transmitting resin plate on which lenses are formed was obtained in the same manner as in Example 1 except that 1.80% by weight of the above light-diffusing agent was blended with the light-transmitting resin, and the total amount of the additives blended was changed to 4.80% by weight. The evaluation results are shown in Table 1.

Comparative Example 5

A light-transmitting resin plate with a two-type/three-layer structure was prepared by a co-extrusion process, wherein the both surfaces were transparent resin layers containing no additives; the center layer between the surface layers was blended with additives including a light-diffusing agent; and the thickness of these three layers were adjusted so that the loading of the light-diffusing agent and the additives relative to the whole light-transmitting resin plate was 1.8% by weight and 4.80% by weight, respectively. The evaluation results are shown in Table 1.
[Table 1]

| | Conditions | | | | | | | Results | | | | |
|---|---|---|---|---|---|---|---|---|---|---|---|---|
| | Min. Thickness | Diffusing agent | Additives | Convex lens on the side opposite to light source | | | Roughness on light source side | Light source image | Luminance | Viewing angle characteristics | Long-term evaluations | |
| | | | | Aspect ratio (h/p) | Ratio of aspect ratios | Shape | | Visible X Invisible O Invisible OO | | | Optical stability | Shape stability |
| | (mm) | (wt%) | (wt%) | | | | (Ra) | | (Cd/m$^2$) | | | |
| Ex. 1 | 1.7 | 0.002 | 3.002 | 0.33 | 1 | Ellipse | 15 | O | 8000 | good | good | good |
| Ex. 2 | 1.7 | 0.03 | 3.03 | 0.33 | 1 | Ellipse | 15 | O | 7000 | good | good | good |
| Ex. 3 | 1.7 | 0.9 | 3.9 | 0.33 | 1 | Ellipse | 15 | O | 5200 | good | good | good |
| Ex. 4 | 1.65 | 0.9 | 3.9 | 0.45 | 1 | Ellipse | 15 | O | 5500 | good | good | good |
| Ex. 5 | 1.65 | 0.9 | 3.9 | 1.31 | 1 | Ellipse | 15 | O | 6000 | good | good | good |
| Ex. 6 | 1.65 | 0.9 | 3.9 | 1.31 | 1 | Ellipse | 7 | O | 6200 | good | good | good |
| Ex. 7 | 1.6 | 0.9 | 3.9 | 2.5 | 1 | Ellipse | 15 | O | 6500 | good | good | good |
| Ex. 8 | 1.7 | 0.9 | 3.9 | 0.33[*1] | 0.72 | Ellipse /Ellipse | 15 | OO | 5800 | excellent | excellent | excellent |
| Ex. 9 | 1.7 | 1.8 | 4.8 | 0.33 | 1 | Ellipse | 15 | O | 5000 | good | good | good |
| Comp. Ex. 1 | 1.7 | 1.8 | 4.8 | - | - | - | - | O | 3600 | good | good | good |
| Comp. Ex. 2 | 1.7 | 0 | 0 | 0.33 | 1 | Ellipse | 15 | O | 4500 | good | poor | poor |
| Comp. Ex. 3 | 1.6 | 0.9 | 3.9 | 3.3 | 1 | Ellipse | 15 | O | 3000 | good | good | good |
| Comp. Ex. 4 | 1.7 | 0.9 | 3.9 | 0.33[*1] | 0.8 | Ellipse /Triangle | 15 | X | 5100 | poor | good | good |

(continued)

| | Conditions | | | Convex lens on the side opposite to light source | | | Roughness on light source side | Results | | | | |
|---|---|---|---|---|---|---|---|---|---|---|---|---|
| | Min. Thickness | Diffusing agent | Additives | | | | | Light source image | Luminance | Viewing angle characteristics | Long-term evaluations | |
| | | | | Aspect ratio (h/p) | Ratio of aspect ratios | Shape | | Visible X Invisible O Invisible OO | | | Optical stability | Shape stability |
| | (mm) | (wt%) | (wt%) | | | | (Ra) | | (Cd/m$^2$) | | | |
| Comp. Ex. 5*2 | 1.7 | 1.8 | 4.8 | 0.33 | 1 | Ellipse | 15 | X | 3800 | poor | poor | good |

*1: The convex lens configured by a combination of a plurality of lenses having different aspect ratios.
*2: In Comparative Example 5, a layered sheet with a two-type/three-layer structure was used.

EP 1 942 370 A1

As evaluation results are shown in Table 1, both the value of luminance and long-term evaluations were good in Examples 1 to 9, and the luminance was low or the evaluation of long-term optical stability was poor in Comparative Examples 1 to 5. From these results, it can be said that the light-transmitting resin plate of the present invention can exhibit sufficient performance as a light-transmitting resin plate for liquid crystal displays which has achieved conversion of a linear light source into a surface light source, has high luminance, and has a satisfactory long-term optical stability.

Industrial Applicability

The light-transmitting resin plate of the present invention can be suitably used as a light diffuser for a direct backlight liquid crystal display.

**Claims**

1.   A light-transmitting resin plate used for a direct backlight for a liquid crystal display comprising a plurality of linear light sources, **characterized in that** the light-transmitting resin plate comprises semi-elliptic convex lenses containing additives including a light-diffusing agent and that said convex lenses are arranged on a light-exiting surface in parallel with the major-axis direction of the linear light sources, and have an aspect ratio (=height/pitch) of 0.2 to 3.0.

2.   The light-transmitting resin plate according to claim 1, **characterized in that** the aspect ratios of adjoining convex lenses have a ratio (=low-aspect lens/high-aspect lens) of 0.6 to 0.95.

3.   The light-transmitting resin plate according to claim 1 or 2, **characterized in that** the additives in the resin plate are in a total concentration of 0.001 % by weight to 5.0% by weight, and the light-diffusing agent included in the additives is in a concentration of 1.5% by weight or less based on the resin plate.

4.   The light-transmitting resin plate according to any of claims 1 to 3, **characterized in that** the resin plate has a minimum thickness of 0.3 to 3.0 mm excluding the convex lens part as a surface thereof.

5.   The light-transmitting resin plate according to any of claims 1 to 4, **characterized in that** said resin plate has a light-entering surface finely roughened on the side opposite to the convex lens surface, wherein the roughened surface has a surface roughness represented by Ra satisfying the following formula:

$$5 \leq \mathrm{Ra} \leq 20.$$

[Figure 1]

[Figure 2]

Relation between total light transmittance and light diffusivity in diffuser

[Figure 3]

(a) Height ↕ Pitch  Height/pitch = 0.45

(b) Height/pitch = 0.65

(c) Height/pitch = 1.31

(d) Height ↕ Pitch  Height/pitch = 0.33

[Figure 4]

[Figure 5]

<table>
<tr><td colspan="2"><b>INTERNATIONAL SEARCH REPORT</b></td><td colspan="2">International application No.<br>PCT/JP2006/320935</td></tr>
</table>

A.  CLASSIFICATION OF SUBJECT MATTER
*G02F1/13357*(2006.01)i, *F21S2/00*(2006.01)i, *F21V5/04*(2006.01)i, *G02B5/02*
(2006.01)i, *F21Y103/00*(2006.01)n

According to International Patent Classification (IPC) or to both national classification and IPC

B.  FIELDS SEARCHED

Minimum documentation searched (classification system followed by classification symbols)
G02F1/13357, F21S2/00, F21V5/04, G02B5/02, F21Y103/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2005-107020 A  (Sony Corp.),<br>21 April, 2005 (21.04.05),<br>Par. Nos. [0085] to [0094]; Fig. 4<br>& EP 1674839 A1          & WO 2005/031446 A1 | 1-5 |
| Y | JP 11-142622 A  (Dainippon Printing Co., Ltd.),<br>28 May, 1999 (28.05.99),<br>Par. Nos. [0011] to [0012]; Fig. 4<br>(Family: none) | 1 |
| Y | JP 2004-200072 A  (Minebea Co., Ltd.),<br>15 July, 2004 (15.07.04),<br>Par. No. [0030]; Fig. 3<br>& US 2004/0120139 A1 | 2 |

☒  Further documents are listed in the continuation of Box C.          ☐  See patent family annex.

| | |
|---|---|
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>16 January, 2007 (16.01.07) | Date of mailing of the international search report<br>23 January, 2007 (23.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/320935

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2002-357703 A (Keiwa Kabushiki Kaisha), 13 December, 2002 (13.12.02), Par. Nos. [0015] to [0025] (Family: none) | 3-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1172801 A
- JP 2194058 A
- JP 7100985 A
- JP 7294709 A
- JP 8211230 A
- JP 8313708 A
- JP 10073808 A